# FASCICULE DE BREVET EUROPEEN

(11) **EP 0 518 751 B1**
(45) Date de publication et mention de la délivrance du brevet: **13.12.1995**
(21) Numéro de dépôt: 92401589.4
(22) Date de dépôt: 09.06.1992
(51) Int. Cl.: G01G 13/02

(54) **Dispositif et procédé de mesure pour produits en vrac, comportant au moins une mesure de poids**
Vorrichtung und Verfahren zur Messung von Schüttgut, mit wenigstens einer Gewichtsmessung
Apparatus and method for measuring bulk material having at least a weight measurement

(30) Priorité: 13.06.1991 FR 9107216
(43) Date de publication de la demande: 16.12.1992
(73) Titulaire: TRIPETTE & RENAUD Société Anonyme:, F-92396 Villeneuve La Garenne Cédex (FR)
(72) Inventeur: Le Gigan, Dominique, F-95620 Parmain (FR)
(74) Mandataire: Chambon, Gérard

(56) Documents cités:
- EP-A- 0 046 130
- FR-A- 2 098 486
- US-A- 3 797 633

## Description

L'invention concerne un dispositif et un procédé de mesure pour produits en vrac, comportant au moins une mesure de poids, et plus particulièrement, mais non exclusivement, pour produits granuleux ou pulvérulents, par exemple pour céréales ou similaires.

Il existe divers appareils de mesure concernant notamment les céréales en grains. Ces mesures peuvent concerner plusieurs paramètres et en particulier le poids spécifique ou le poids pour un volume donné.

Dans ce dernier cas, il est nécessaire de faire une pesée à volume constant du produit concerné et ce type de mesure peut aussi faire partie d'un ensemble plus complet, comme par exemple, pour une mesure du taux d'humidité dudit produit.

A cet effet, il existe des dispositifs connus comportant un capteur de pesée et qui présentent notamment l'inconvénient que ledit capteur de pesée est sollicité en permanence. Ces dispositifs comportent aussi plusieurs moteurs ou actionneurs pour commander les divers organes d'ouverture, de fermeture, ou autre.

Toutefois, le dispositif décrit dans le EP-A-46130 comporte des moyens de pesée qui peuvent ne pas être sollicités en permanence et plus particulièrement, il s'agit d'un dispositif de mesure pour produits, comportant au moins une trémie d'alimentation du produit, au moins une cellule destinée à recevoir ledit produit, un équipage qui est monté mobile en va et vient vertical de montée-descente par rapport à un châssis fixe, lequel équipage comporte des moyens pour entraîner ladite cellule dans son mouvement, et un capteur de pesée qui est monté sur une partie du châssis fixe et qui est aménagé pour supporter la cellule en assurant sa mesure, dans une position déterminée de celle-ci, position dite de pesée, tout en se désolidarisant de ladite cellule dans au moins une autre position.

L'inventeur propose un dispositif et un procédé particulièrement simple qui, entre' autre, protège le capteur de pesée en ne sollicitant celui-ci que lorsque cela est nécessaire (à savoir pour les mesures initiales, pendant le remplissage, et pour les mesures finales).

Par ailleurs, le dispositif selon l'invention permet de vérifier, comme il sera expliqué ci-après, le calibrage du capteur de pesée à chaque cycle de pesée.

Le dispositif selon l'invention peut en outre ne comporter qu'un seul moteur alors que beaucoup de manoeuvres s'effectuent par des moyens mécaniques combinés avec un seul mouvement général.

A cet effet, le dispositif selon l'invention comporte des moyens du type précité à propos du EP-A-46130, mais il est notamment remarquable en ce que l'équipage mobile comporte des moyens de support pour la cellule, qui sont aménagés de manière telle qu'à partir de ladite position de pesée, un mouvement de l'équipage mobile dans un sens désolidarise celui-ci de la cellule, le capteur se désolidarisant de ladite cellule dans l'autre sens, tandis que la cellule est munie d'un moyen d'ouverture et de fermeture pour l'évacuation à volonté dudit produit après traitement.

De préférence, les moyens de support de l'équipage mobile et le capteur sont disposés de manière telle que la cellule passe des moyens de support de l'équipage mobile au capteur, au cours du mouvement de descente de l'équipage et au contraire, du capteur aux moyens de support de l'équipage mobile au cours de son mouvement de montée.

Selon un mode de réalisation, la trémie d'alimentation comporte au moins une trappe d'évacuation qui est munie d'un volet sollicité à la fermeture par un moyen de rappel tandis qu'un moyen d'actionnement pour son ouverture est prévu pour coopérer avec un moyen conjugué solidaire de l'équipage mobile. Plus particulièrement, le moyen d'actionnement du volet de la trémie d'alimentation présente la forme d'une butée solidaire dudit volet tandis que le moyen conjugué solidaire de l'équipage mobile est un bras destiné à venir s'appuyer sur ladite butée et provoquer l'ouverture dudit volet au cours du mouvement vertical dudit équipage mobile.

Le moyen d'ouverture et de fermeture de la cellule peut comporter un volet qui est aménagé sous ladite cellule et qui est sollicité à la fermeture par un moyen de rappel tandis qu'un moyen d'actionnement est prévu pour coopérer avec un moyen conjugué solidaire du chassis fixe. Dans ce cas et selon un mode de réalisation, le moyen d'actionnement du volet de la cellule présente la forme d'un levier ou butée solidaire dudit volet tandis que le moyen conjugué solidaire du chassis est un bras ou doigt destiné à venir s'appuyer sur ledit levier ou butée et provoquer l'ouverture dudit volet au cours du mouvement vertical de ladite cellule.

Un mode de réalisation avantageux est remarquable en ce qu'il comporte au moins deux cellules distinctes reliées entre elles par des entretoises. Dans ce cas, par exemple, le capteur et les moyens de support de l'équipage mobile sont aménagés pour coopérer avec lesdites entretoises afin d'assurer le soutien des cellules respectivement en position de pesée par le capteur et en mouvement par l'équipage mobile.

Le dispositif selon l'invention peut avoir diverses applications et lorsqu'il est notamment destiné à mesurer la teneur en humidité des céréales, oléagineux ou protéagineux, par effet capacitif et qu'il comporte, comme précisé ci-avant, au moins deux cellules, chaque cellule peut alors former avantageusement un condensateur de mesure tandis que les cellules sont électriquement connectées en parallèle.

Un dispositif selon l'invention peut avantageusement ne comporter qu'un seul moteur de montée-descente pour l'équipage mobile.

Un mode de réalisation préféré est remarquable en ce que les moyens de support de l'équipage mobile, le capteur de pesée et les moyens d'actionnement du volet de la trémie d'alimentation et du volet d'ouverture de la cellule, sont aménagés de manière telle qu'au cours d'un mouvement de descente de l'équipage mobile à partir d'une position initiale haute dans laquelle la cellule est portée par ledit équipage mobile, les volets de la trémie d'alimentation et de la cellule étant respectivement fermé et ouvert, on passe vers une position où la cellule repose sur le capteur de pesée, tandis qu'au cours de cette descente le volet de la cellule se ferme et qu'une poursuite de la descente entraîne l'ouverture de la trémie d'alimentation, une montée de l'équipage mobile provoquant les situations successivement inverses.

L'invention concerne aussi un procédé de mesure au moyen d'un tel dispositif, procédé qui est remarquable en ce qu'il consiste à:
a) tarer la cellule de mesure en la pesant à vide, en faisant reposer ladite cellule sur le capteur de pesée;
b) remplir la cellule avec le produit à analyser après avoir fermé le volet de la cellule et en ouvrant la trémie d'alimentation;
c) fermer la trémie d'alimentation;
d) peser la cellule ainsi remplie;
e) ouvrir la cellule pour évacuer le produit.

Pour diverses applications, durant et/ou entre certaines au moins des opérations a) à e), on effectue d'autres mesures que la pesée, au moyen de capteurs convenables. Il peut s'agir, par exemple, de mesures de température, de taux d'humidité, etc.

Un procédé tout à fait avantageux est remarquable en ce que les opérations a) et b) s'effectuent au cours d'un mouvement de descente de l'équipage mobile et les opérations c) à e), au cours d'une remontée dudit équipage mobile.

L'invention sera bien comprise et d'autres particularités apparaîtront à la lecture de la description qui va suivre et qui se réfère aux dessins annexés dans lesquels:
- la figure 1 montre en perspective un dispositif selon l'invention,
- les figures 2a à 2e montrent schématiquement en coupe verticale une partie du dispositif selon l'invention dans cinq positions distinctes,
- les figures 3a à 3d montrent schématiquement selon la flèche F₃ de la figure 1, des moyens conjugués de la cellule et du chassis pour l'ouverture de cette dernière, moyens également schématisés sur les figures 2a à 2e, et,
- les figures 4a à 4f schématisent un diagramme de fonctionnement du procédé selon l'invention.

Le dispositif selon l'invention comporte un chassis 1 notamment formé ici d'un socle 1a, d'une potence 1b et d'un support 1c.

Une trémie d'alimentation 2 est fixée à la potence 1b et un capteur 3 de pesée est disposé sur le support 1c.

Le dispositif comporte aussi un équipage mobile 4 qui est aménagé pour être pourvu d'un mouvement en va et vient vertical de montée-descente grâce ici à une vis sans fin 5 qui est mue en rotation à volonté dans un sens ou dans l'autre par un moteur ou servomécanisme 6 (par exemple un moteur électrique bidirectionnel) monté sur le chassis, l'équipage mobile 4 étant pourvu de taraudages conjugués de ladite vis, ménagés dans des parties appropriées telles que 4a et 4b dudit équipage mobile.

L'équipage mobile comporte en outre un support 4c destiné à venir supporter un ensemble de deux cellules 7a et 7b sous lesquelles est disposé un réceptacle de récupération 8.

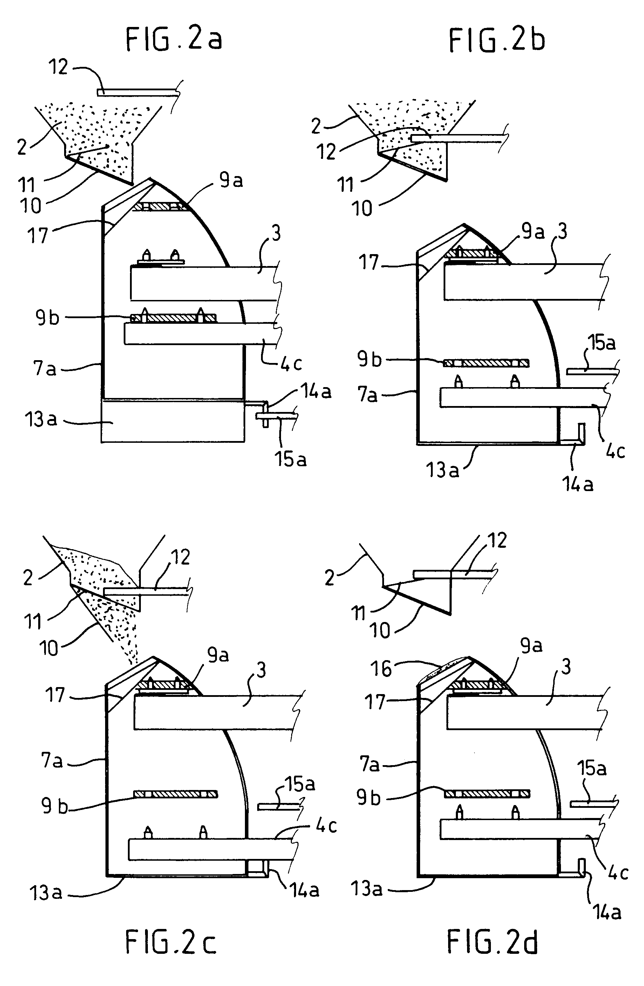

Les cellules 7a et 7b sont réunies entre elles par des entretoises schématisées en coupe par 9a, 9b sur les figures 2a à 2e dont le plan de coupe se situe précisément selon un plan vertical passant entre lesdites cellules.

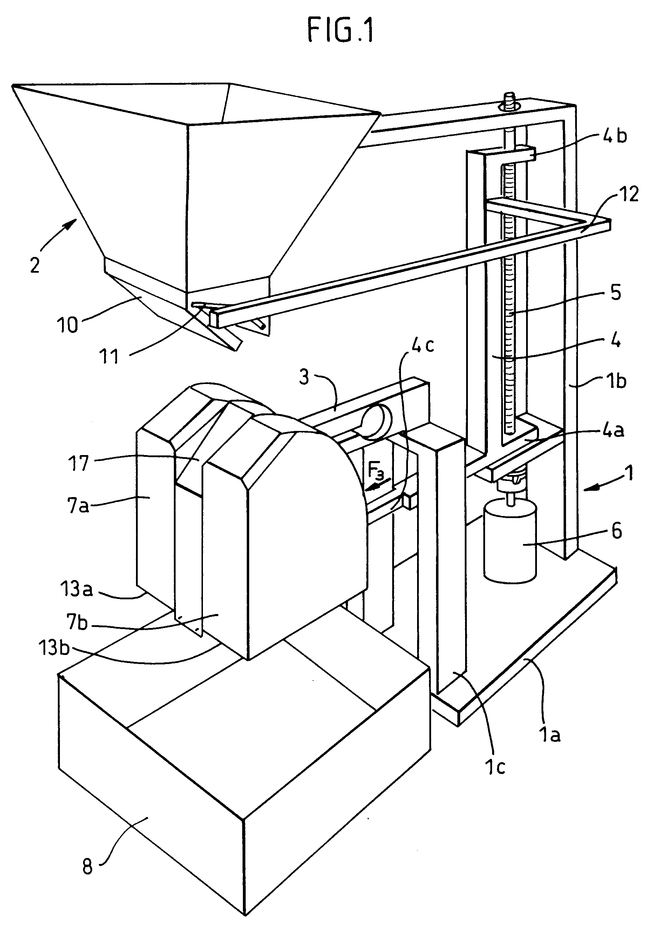

La trémie d'alimentation 2 est pourvue d'une trappe munie d'un volet 10 sollicité en position de fermeture par un moyen de rappel (non représenté), lequel volet est équipé d'une butée ou came 11 (figure 1 et figures 2a à 2e). La butée 11, ici en forme de manivelle, est destinée à coopérer avec un bras 12 (figures 1, et 2a à 2d), qui est solidaire de l'équipage mobile 4.

Les cellules 7a et 7b comportent chacune un volet 13a, 13b à leur partie inférieure pour l'évacuation du produit.

Comme le montrent bien les figures 2a à 2e, les entretoises 9a et 9b comportent des moyens, en l'occurrence des ajours, destinés à coopérer avec des éléments correspondants, ici des saillies, aménagées sur le capteur 3 et le support 4c de manière que les cellules puissent être supportées soit par le support 4c, soit par le capteur 3 selon la position de l'équipage mobile par rapport à la position fixe du capteur.

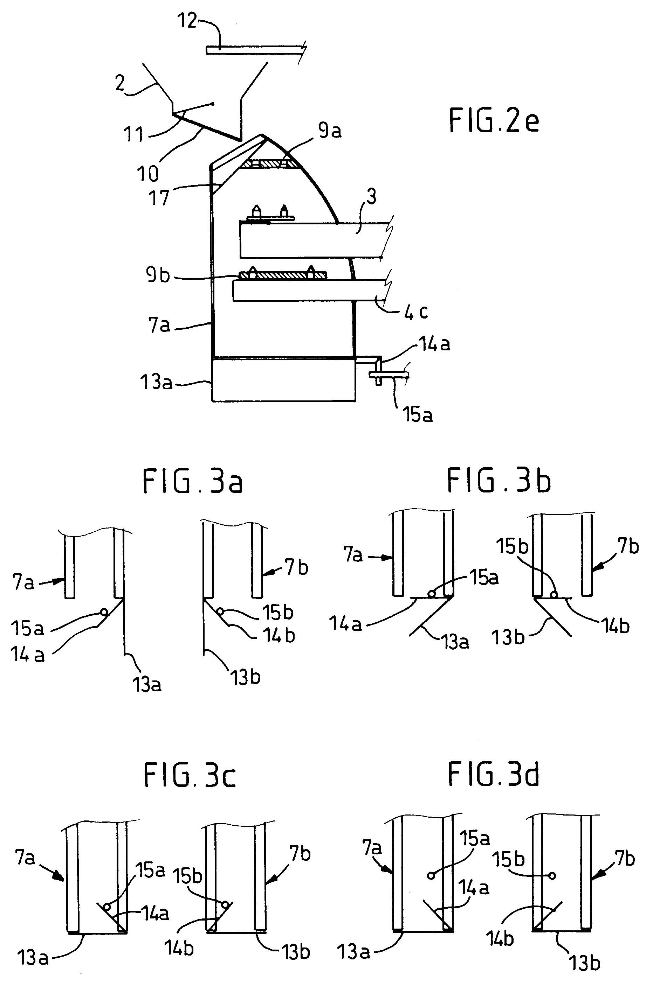

Par ailleurs, les volets 13a, 13b des cellules 7a, 7b sont sollicités chacun en position de fermeture par un moyen de rappel (non représenté) et sont pourvus d'un levier 14a, 14b (figures 3a à 3d) destiné à coopérer avec un bras 15a, 15b solidaire du chassis 1 et dont l'extrémité seulement est schématisée sur les figures 3a à 3d.

Les dispositions des divers moyens 3, 4c, 9a, 9b, 11, 12, 13a, 13b, 14a, 14b, sont telles que le fonctionnement en mouvement qui va être décrit en même temps que le procédé de mesure, est le suivant.

Initialement, au repos, l'équipage mobile se trouve en position haute, notée I (figures 2a, 3a, et 4a), position dans laquelle les cellules sont portées par le support 4c qui coopère avec l'entretoise 9b. Dans cette position, on constate que la trémie 2 est fermée (sollicitée à la fermeture par son moyen de rappel), le bras 12 étant nettement plus haut que la butée 11 tandis que les volets 13a, 13b des cellules 7a, 7b sont en position ouverte grâce aux bras 15a et 15b fixes qui s'appuient sur les leviers 14a, 14b (voir plus particulièrement la figure 3a) à l'encontre de leur moyen de rappel. On peut noter au passage que les cellules 7a, 7b sont ouvertes au repos, ce qui est particulièrement avantageux (aération, vidage complet, circulation d'air permettant un retour rapide à la température ambiante d'un éventuel capteur de température, ...).

De cette position I, l'équipage mobile entame sa descente au moyen du moteur 6 pour atteindre une position II (figures 2b, 3d et 4b), position dans laquelle l'entretoise 9a coopère avec le capteur 3, ce dernier supportant ainsi les cellules 7a et 7b alors que simultanément, le support 4c s'est dégagé de l'entretoise 9b (voir plus particulièrement la figure 2b). Au cours du passage de la position I à la position II, on constate en outre que les volets 13a et 13b se ferment puisque les cellules, en descendant, provoquent un décalage relatif vers le haut des bras 15a, 15b par rapport auxdites cellules 7a, 7b (mais c'est bien dû en fait à la descente des cellules et on peut se reporter plus particulièrement aux figures 3b à 3d, les figures 3b et 3c montrant deux positions intermédiaires entre la position 2a, 4a et la position 2b, 4b).

Le capteur 3 supportant les cellules 7a, 7b, il est clair que cette position II correspond au tarage, c'est-à-dire à la mesure initiale du poids des cellules à vide.

En poursuivant encore la descente de l'équipage mobile 4, on passe de la position II vers la position la plus basse de ce dernier, notée III (figures 2c, 3d, 4c), position dans laquelle le bras 12 s'appuie sur la butée 11 de la trémie 2 de telle sorte que celle-ci s'ouvre, la position relative des leviers 14a, 14b et des bras 15a, 15b pour les volets 13a, 13b étant représentée plus particulièrement à la figure 3d, c'est-à-dire qu'elle est inchangée pour ces éléments (14a,14b,15a,15b) par rapport à la position II, puisque la cellule est immobilisée depuis ladite position II. La position III correspond au remplissage des cellules.

A partir de cette position III, l'équipage mobile remonte vers une position notée II′ (figures 2d, 3d, 4d) qui correspond à la position II des figures 2b, 3d, 4d, c'est-à-dire dans laquelle la trémie 2 s'est refermée tandis que le capteur 3 peut mesurer le poids des cellules, mais ici avec des cellules pleines.

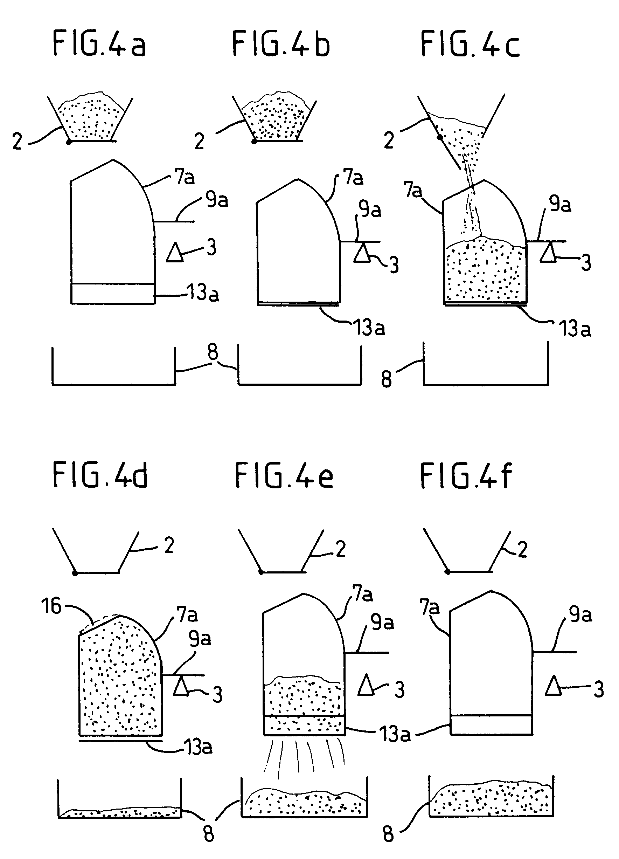

De la position II', l'équipage mobile poursuivant sa remontée, arrive dans une position notée I' (figures 2e, 3a, 4e, 4f) qui correspond à la position initiale I, les volets 13a, 13b s'étant ouverts de telle sorte que les cellules se vident (voir plus particulièrement les figures 4e, 4f).

Pour résumer, on comprend donc que le dispositif passe successivement dans les positions suivantes:

| | | |
|---|---|---|
| - position initiale | I | figures 2a, 3a, 4a |
| - position tarage | II | figures 2b, 3d, 4b |
| - position remplissage | III | figures 2c, 3d, 4c |
| - position pesée des cellules pleines. | II' | figures 2d, 3d, 4d |
| - position vidage et retour | I' | figures 2e, 3a, 4e, 4f. |

On comprend aussi que l'on passe des positions I, II, III en descendant, des positions III, II', I' en remontant et que mécaniquement les positions d'une part I et I', II et II' sont semblables.

Comme le montrent bien les dessins, la forme des cellules est avantageuse car elle permet d'obtenir un auto-arasage, c'est-à-dire la formation d'un dôme 16 (figures 2d, 4d) de produit en excès particulièrement réduit assurant une meilleure fiabilité dans la répétition des mesures à volume constant, mais cette particularité fait l'objet d'un autre brevet. Entre les cellules, on peut aussi prévoir un pan incliné 17 (figures 1 et 2a à 2e) pour assurer un meilleur écoulement du produit excédentaire.

Par ailleurs, il est clair que d'autres mesures peuvent être établies durant et/ou entre certaines des phases précédemment décrites.

C'est ainsi notamment, comme il a déjà été dit, que le dispositif selon l'invention permet de vérifier le capteur. En effet, dans les positions des figures 2a et 2e, le capteur de pesée 3 est complètement libre, c'est-à-dire que la valeur de mesure qu'il fournit correspond à une valeur "à vide" ou zéro relatif. De la sorte, tout décalage de ce zéro, qui peut évoluer au cours du temps (notamment en fontion de la température), pourra être connu et il sera possible d'en tenir compte dans le résultat. Le capteur 3 est par exemple du type à pont de jauge et à moment constant.

En outre, la connaissance du poids réel de la cellule permettra bien sûr de contrôler aussi la sensibilité du capteur en position II.

Dans le cas de la mesure du taux d'humidité par effet capacitif, les parois latérales des cellules peuvent constituer les armatures des condensateurs de mesure. Dans ce cas, lesdites cellules peuvent en outre être connectées en parallèle (les capacités des condensateurs s'additionnant). L'enregistrement et le traitement des mesures ne sont pas traités plus particulièrement ici.

Les divers moyens mécaniques sont donnés à titre d'exemples non limitatifs et il est possible, bien sûr, de modifier ou imaginer d'autres moyens (vérin à la place de la vis 5, systèmes de came pour les volets 10, 13a et 13b, ...). En outre, des moyens de guidage non représentés sont de préférence prévus pour l'équipage mobile, et la trappe de la trémie 2 peut être dédoublée pour remplir de manière plus spécifique chaque cellule.

Il est aussi possible de n'utiliser qu'une seule cellule ou au contraire plus de deux, etc.

## Revendications

1. Dispositif de mesure pour produits, comportant au moins une trémie d'alimentation (2) du produit, au moins une cellule (7a, 7b) destinée à recevoir ledit produit, un équipage (4) qui est monté mobile en va et vient vertical de montée-descente par rapport à un châssis fixe (1), lequel équipage (4) comporte des moyens pour entraîner ladite cellule (7a, 7b) dans son mouvement, et un capteur de pesée (3) qui est monté sur une partie (1c) du châssis fixe (1) et qui est aménagé pour supporter la cellule en assurant sa mesure, dans une position déterminée de celle-ci, position dite de pesée, tout en se désolidarisant de ladite cellule dans au moins une autre position, caractérisé en ce que l'équipage mobile (4) comporte des moyens de support (4c) pour la cellule (7a, 7b), qui sont aménagés de manière telle qu'à partir de ladite position de pesée, un mouvement de l'équipage mobile (4) dans un sens désolidarise celui-ci de la cellule, le capteur se désolidarisant de ladite cellule dans l'autre sens, tandis que la cellule (7a, 7b) est munie d'un moyen d'ouverture et de fermeture pour l'évacuation à volonté dudit produit après traitement.

2. Dispositif de mesure selon la revendication 1, caractérisé en ce que les moyens de support (4c) de l'équipage mobile (4) et le capteur (3) sont disposés de manière telle que la cellule passe des moyens de support (4c) de l'équipage mobile au capteur (3), au cours du mouvement de descente de l'équipage et au contraire, du capteur (3) aux moyens de support (4c) de l'équipage mobile au cours de son mouvement de montée.

3. Dispositif selon l'une des revendications 1 et 2, caractérisé en ce que la trémie d'alimentation (2) comporte au moins une trappe d'évacuation qui est munie d'un volet (10) sollicité à la fermeture par un moyen de rappel tandis qu'un moyen d'actionnement pour son ouverture est prévu pour coopérer avec un moyen conjugué solidaire de l'équipage mobile.

4. Dispositif selon la revendication 3, caractérisé en ce que le moyen d'actionnement du volet (10) de la trémie d'alimentation présente la forme d'une butée (11) solidaire dudit volet (10) tandis que le moyen conjugué solidaire de l'équipage mobile (4) est un bras (12) destiné à venir s'appuyer sur ladite butée et provoquer l'ouverture dudit volet au cours du mouvement vertical dudit équipage mobile.

5. Dispositif selon l'une des revendications 1 à 4, caractérisé en ce que le moyen d'ouverture et de fermeture de la cellule (7a,7b) comporte un volet (13a,13b) qui est aménagé sous ladite cellule et qui est sollicité à la fermeture par un moyen de rappel tandis qu'un moyen d'actionnement est prévu pour coopérer avec un moyen conjugué solidaire du chassis fixe.

6. Dispositif selon la revendication 5, caractérisé en ce que le moyen d'actionnement du volet (13a,13b) de la cellule (7a,7b) présente la forme d'un levier ou butée (14a,14b) solidaire dudit volet tandis que le moyen conjugué solidaire du chassis est un bras ou doigt (15a,15b) destiné à venir s'appuyer sur ledit levier ou butée et provoquer l'ouverture dudit volet au cours du mouvement vertical de ladite cellule.

7. Dispositif selon l'une des revendications 1 à 6, caractérisé en ce qu'il comporte au moins deux cellules (7a,7b) distinctes reliées entre elles par des entretoises (9a,9b).

8. Dispositif selon la revendication 7, caractérisé en ce que le capteur (3) et les moyens de support (4c) de l'équipage mobile sont aménagés pour coopérer avec lesdites entretoises (9a,9b) afin d'assurer le soutien des cellules (7a,7b) respectivement en position de pesée par le capteur et en mouvement par l'équipage mobile.

9. Dispositif selon l'une des revendications 7 et 8, notamment destiné à mesurer la teneur en humidité des céréales, oléagineux ou protéagineux, par effet capacitif, caractérisé en ce que chaque cellule forme un condensateur de mesure, les cellules étant électriquement connectées en parallèle.

10. Dispositif selon l'une des revendications 1 à 9, caractérisé en ce que l'équipage mobile (4) comporte un seul moteur ou servomécanisme (6) de montée-descente.

11. Dispositif selon l'ensemble des revendications 2, 3 et 5, caractérisé en ce que les moyens de support (4c) de l'équipage mobile (4), le capteur de pesée (3) et les moyens d'actionnement (11,12; 14a,14b,15a,15b) du volet (10) de la trémie d'alimentation (2) et du volet (13a,13b) d'ouverture de la cellule (7a,7b), sont aménagés de manière telle qu'au cours d'un mouvement de descente de l'équipage mobile (4) à partir d'une position initiale haute dans laquelle la cellule est portée par ledit équipage mobile, les volets (10; 13a,13b) de la trémie d'alimentation (2) et de la cellule (7a,7b) étant respectivement fermé et ouvert, on passe vers une position où la cellule repose sur le capteur de pesée (3), tandis qu'au cours de cette descente le volet (13a,13b) de la cellule (7a,7b) se ferme et qu'une poursuite de la descente entraîne l'ouverture de la trémie d'alimentation (2), une montée de l'équipage mobile provoquant les situations successivement inverses.

12. Procédé de mesure au moyen d'un dispositif selon l'une des revendications 1 à 11, caractérisé en ce qu'il consiste à:
a) tarer la cellule (7a,7b) de mesure en la pesant à vide, en faisant reposer ladite cellule sur le capteur (3) de pesée;
b) remplir la cellule (7a,7b) avec le produit à analyser après avoir fermé le volet (13a,13b) de la cellule (7a,7b) et en ouvrant la trémie d'alimentation;
c) fermer la trémie (2) d'alimentation;
d) peser la cellule (7a,7b) ainsi remplie;
e) ouvrir la cellule (7a,7b) pour évacuer le produit.

13. Procédé selon la revendication 12, caractérisé en ce que durant et/ou entre certaines au moins des opérations a) à e), on effectue d'autres mesures que la pesée, au moyen de capteurs convenables.

14. Procédé selon l'une des revendications 12 et 13, caractérisé en ce que les opérations a) et b) s'effectuent au cours d'un mouvement de descente de l'équipage mobile (4) et les opérations c) à e), au cours d'une remontée dudit équipage mobile.

## Claims

1. Measuring device for products, comprising at least one product feeding hopper (2), at least one cell (7a, 7b) designed to receive said product, a rig (4) which is mounted so that it can move to and fro vertically upwards and downwards in relation to a fixed chassis (1), said rig (4) comprising means to entrain said cell (7a, 7b) in its movement, and a weighing sensor (3) which is mounted on a part (1c) of the fixed chassis (1) and which is arranged to support the cell while measuring it, in a given position of the latter, the so-called weighing position, while separating from said cell in at least one other position, characterised in that the moving rig (4) comprises supporting means (4c) for the cell (7a, 7b) which are arranged so that from said weighing position a movement of the moving rig (4) in one direction separates the latter from the cell, the sensor separating from said cell in the other direction, while the cell (7a, 7b) is provided with an opening and closing means for discharge of said product at will after processing.

2. Measuring device according to claim 1, characterised in that the supporting means (4c) of the moving rig (4) and the sensor (3) are disposed such that the cell passes from the supporting means (4c) of the moving rig to the sensor (3) in the course of the downward movement of the rig and, conversely, from the sensor (3) to the supporting means (4c) of the moving rig in the course of its upward movement.

3. Device according to one of claims 1 and 2, characterised in that the feeding hopper (2) comprises at least one outlet hatch which is provided with a flap (10) drawn to the closed position by a return means while an actuating means for its opening is provided to cooperate with a corresponding means locked to the moving rig.

4. Device according to claim 3, characterised in that the actuating means for the flap (10) of the feed hopper takes the form of a thrust element (11) locked to said flap (10) while the corresponding means locked to the moving rig (4) is an arm (12) designed to bear on said thrust element and cause the opening of said flap in the course of the vertical movement of said moving rig.

5. Device according to one of claims 1 to 4, characterised in that the opening and closing means of the cell (7a, 7b) comprises a flap (13a, 13b) which is arranged under said cell and which is drawn to the closing position by a return means while an actuating means is provided to cooperate with a corresponding means locked to the fixed chassis.

6. Device according to claim 5, characterised in that the actuating means of the flap (13a, 13b) of the cell (7a, 7b) takes the form of a lever or thrust element (14a, 14b) locked to said flap while the corresponding means locked to the chassis is an arm or finger (15a, 15b) designed to bear on said lever or thrust element and cause the opening of said flap in the course of the vertical movement of said cell.

7. Device according to one of claims 1 to 6, characterised in that it comprises at least two separate cells (7a, 7b) joined together by ties (9a, 9b).

8. Device according to claim 7, characterised in that the sensor (13) and the supporting means (4c) of the moving rig are arranged to cooperate with said ties (9a, 9b) in order to support the cells (7a, 7b) respectively in the position for weighing by the sensor and during movement by the moving rig.

9. Device according to one of claims 7 and 8, designed in particular to measure the moisture content of oleaginous or proteaginous cereals by capacitive effect, characterised in that in each cell forms a measuring condenser, the cells being connected electrically in parallel.

10. Device according to one of claims 1 to 9, characterised in that the moving rig (4) comprises a single motor or servo mechanism (6) for upward and downward movement.

11. Device according to all of claims 2, 3 and 5, characterised in that the supporting means (4c) of the moving rig (4), the weighing sensor (3) and the actuating means (11, 12; 14a, 14b, 15a, 15b) of the flap (10) of the feeding hopper (2) and of the flap (13a, 13b) opening the cell (7a, 7b) are arranged such that in the course of a downward movement of the moving rig (4) from an initial high position in which the cell is carried by said moving rig, the flaps (10; 13a, 13b) of the feeding hopper (2) and of the cell (7a, 7b) being respectively closed and open, a position is reached in which the cell rests on the weighing sensor (3), while in the course of this downward movement the flap (13a, 13b) of the cell (7a, 7b) closes and a continuation of the downward movement leads to the opening of the feeding hopper (2), an upward movement of the moving rig causing the successive reverse situations.

12. Process for measuring by means of a device according to one of claims 1 to 11, characterised in that it consists in:
a) calibrating the measuring cell (7a, 7b) by weighing it unladen, by making said cell rest on the weighing sensor (3);
b) filling the cell (7a, 7b) with the product to be analysed after having closed the flap (13a, 13b) of the cell (7a, 7b) and opening the feeding hopper;
c) closing the feeding hopper (2);
d) weighing the cell (7a, 7b) thus filled;
e) opening the cell (7a, 7b) to discharge the product.

13. Process according to claim 12, characterised in that measurements other than the weighing are carried out during and/or between at least some of the operations a) to e) by means of appropriate sensors.

14. Process according to one of claims 12 and 13, characterised in that the operations a) and b) are carried out in the course of a downward movement of the moving rig (4) and the operations c) to e) are carried out in the course of a following upward movement of said moving rig.

## Patentansprüche

1. Vorrichtung zur Messung von Erzeugnissen mit mindestens einem Einfülltrichter (2) für das Erzeugnis, mindestens einer zur Aufnahme des besagten Erzeugnisses bestimmten Zelle (7a, 7b), einem beweglichen Organ (4), das in vertikaler Richtung hin und her und in Bezug auf ein festes Grundgestell (1) aufwärts und abwärts bewegbar montiert ist, wobei das Organ (4) Mittel zum Mitnehmen der besagten Zelle (7a, 7b) bei seiner Bewegung aufweist, und mit einem Gewichtsmeßfühler (3), der an einem Teil (1c) des festen Grundgestells (1) montiert und derart angeordnet ist, daß er die Zelle zur Sicherstellung der Messung in einer vorgegebenen, Wägeposition genannten, Position von ihr trägt und sich von der besagten Zelle in mindestens einer anderen Position vollständig trennt, dadurch gekennzeichnet, daß das bewegliche Organ (4) Unterstützungsmittel (4c) für die Zelle (7a, 7b) aufweist, die derart angeordnet sind, daß ausgehend von der besagten Wägeposition eine Bewegung des beweglichen Organs (4) in einer Richtung dieses von der Zelle trennt und der Meßfühler sich von der besagten Zelle bei einer Bewegung in der anderen Richtung trennt, und die Zelle (7a, 7b) mit einem Mittel zum Öffnen und Schließen versehen ist zur wahlweisen Abführung des besagten Erzeugnisses nach der Bearbeitung.

2. Vorrichtung zur Messung nach Anspruch 1, dadurch gekennzeichnet, daß die Unterstützungsmittel (4c) des beweglichen Organs (4) und der Meßfühler (3) derart angeordnet sind, daß die Zelle im Verlauf der Abwärtsbewegung des Organs von den Unterstützungsmitteln (4c) des beweglichen Organs (4) auf den Meßfühler (3) und im Gegensatz dazu im Verlauf seiner Aufwärtsbewegung vom Meßfühler (3) auf die Unterstützungsmittel (4c) des beweglichen Organs übergeht.

3. Vorrichtung nach einem der Ansprüche 1 und 2, dadurch gekennzeichnet, daß der Einfülltrichter (2) mindestens eine Entleerungsöffnung aufweist, die mit einer Verschlußklappe (10) versehen ist, welche durch ein Rückstellmittel in Schließrichtung beansprucht ist, während ein Betätigungsmittel für ihre Öffnung vorgesehen ist, das mit einem fest mit dem beweglichen Organ verbundenen Mittel zusammenwirkt.

4. Vorrichtung nach Anspruch 3, dadurch gekennzeichnet, daß das Betätigungsmittel für die Verschlußklappe (10) des Einfülltrichters die Form eines mit der besagten Verschlußklappe (10) fest verbundenen Anschlags (11) aufweist, während das fest mit dem beweglichen Organ (4) verbundene Mittel ein Arm (12) ist, der dazu bestimmt ist, sich an den besagten Anschlag anzulegen und im Verlauf der Vertikalbewegung des besagten beweglichen Organs die Öffnung der besagten Verschlußklappe herbeizuführen.

5. Vorrichtung nach einem der Ansprüche 1 bis 4, dadurch gekennzeichnet, daß das Mittel zum Öffnen und Schließen der Zelle (7a, 7b) eine Verschlußklappe (13a, 13b) aufweist, die unter der besagten Zelle angeordnet ist und durch ein Rückstellmittel in Schließrichtung beansprucht ist, während ein Betätigungsmittel vorgesehen ist, das mit einem fest mit dem festen Grundgestell verbundenen Mittel zusammenwirkt.

6. Vorrichtung nach Anspruch 5, dadurch gekennzeichnet, daß das Betätigungsmittel für die Verschlußklappe (13a, 13b) der Zelle (7a, 7b) die Form eines mit der besagten Verschlußklappe fest verbundenen Hebels oder Anschlags (14a, 14b) aufweist, während das fest mit dem Grundgestell verbundene Mittel ein Arm oder Finger (15a, 15b) ist, der dazu bestimmt ist, sich an den besagten Hebel oder Anschlag anzulegen und im Verlauf der Vertikalbewegung der besagten Zelle die Öffnung der besagten Verschlußklappe herbeizuführen.

7. Vorrichtung nach einem der Ansprüche 1 bis 6, dadurch gekennzeichnet, daß sie mindestens zwei verschiedene Zellen (7a, 7b) aufweist, die über Stege (9a, 9b) miteinander verbunden sind.

8. Vorrichtung nach Anspruch 7, dadurch gekennzeichnet, daß der Meßfühler (3) und die Unterstützungsmittel (4c) des beweglichen Organs so angeordnet sind, daß sie mit den besagten Stegen zusammenwirken, um jeweils die Unterstützung der Zellen (7a, 7b) in der Wägeposition durch den Meßfühler und bei der Bewegung durch das bewegliche Organ sicherzustellen.

9. Vorrichtung nach einem der Ansprüche 7 und 8, insbesondere bestimmt zur Messung des Feuchtigkeitsgehalts von Getreide sowie öl- oder proteinhaltigen Früchten durch kapazitiven Effekt, dadurch gekennzeichnet, daß jede Zelle einen Meßkondensator bildet und die Zellen elektrisch einander parallelgeschaltet sind.

10. Vorrichtung nach einem der Ansprüche 1 bis 9, dadurch gekennzeichnet, daß das bewegliche Organ (4) einen einzigen Motor oder Servomechanismus für die Aufwärts- Abwärtsbewegung aufweist.

11. Vorrichtung nach der Gesamtheit der Ansprüche 2, 3 und 5, dadurch gekennzeichnet, daß die Unterstützungsmittel (4c) des beweglichen Organs (4), der Gewichtsmeßfühler (3) und die Betätigungsmittel (11, 12; 14a, 14b, 15a, 15b) für die Verschlußklappe (10) des Einfülltrichters (2) und für die Verschlußklappe (13a, 13b) der Öffnung der Zelle (7a, 7b) derart angeordnet sind, daß im Verlauf einer Abwärtsbewegung des beweglichen Organs (4), ausgehend von einer hohen Anfangsposition, in welcher die Zelle von dem besagten beweglichen Organ getragen ist und die Verschlußklappen (10; 13a, 13b) des Einfülltrichters (2) und der Zelle (7a, 7b) jeweils geschlossen und offen sind, in eine Position übergegangen wird, in der die Zelle auf dem Gewichtsmeßfühler (3) aufliegt, während im Verlauf dieser Abwärtsbewegung die Verschlußklappe (13a, 13b) der Zelle (7a, 7b) sich schließt und eine Fortsetzung der Abwärtsbewegung die Öffnung des Einfülltrichters (2) bewirkt und eine Aufwärtsbewegung des beweglichen Organs die umgekehrt aufeinanderfolgenden Vorgänge herbeiführt.

12. Verfahren zur Messung mittels einer Vorrichtung nach einem der Ansprüche 1 bis 11, dadurch gekennzeichnet, daß es aus den folgenden Verfahrensschritten besteht:
a) Austarieren der Meßzelle (7a, 7b) durch Wiegen im leeren Zustand, indem man die besagte Zelle auf dem Gewichtsmeßfühler aufliegen läßt;
b) Füllen der Zelle (7a, 7b) mit dem zu analysierenden Erzeugnis, nachdem die Verschlußklappe (13a, 13b) der Zelle (7a, 7b) geschlossen worden ist, indem der Einfülltrichter geöffnet wird;
c) Schließen des Einfülltrichters (2);
d) Wiegen der so gefüllten Zelle (7a, 7b);
e) Öffnen der Zelle (7a, 7b) zum Abführen des Erzeugnisses.

13. Verfahren nach Anspruch 12, dadurch gekennzeichnet, daß während und/oder zwischen mindestens bestimmter der Verfahrensschritte a) bis e) andere Messungen als die Gewichtsbestimmung mittels entsprechender Sensoren vorgenommen werden.

14. Verfahren nach einem der Ansprüche 12 und 13, dadurch gekennzeichnet, daß die Verfahrensschritte a) und b) im Verlauf einer Abwärtsbewegung des beweglichen Organs (4) und die Verfahrensschritte c) bis e) im Verlauf einer Wiederaufwärtsbewegung des besagten beweglichen Organs ausgeführt werden.
